Europäisches Patentamt

(19) European Patent Office    (11) Publication number: **0 045 594**

Office européen des brevets    **B1**

(12) **EUROPEAN PATENT SPECIFICATION**

(45) Date of publication of patent specification: **02.05.85**    (51) Int. Cl.⁴: **G 02 B 6/38**

(21) Application number: **81303371.9**

(22) Date of filing: **23.07.81**

(54) **An optical connector for aligning collinearly the axes of a pair of optical waveguides utilising a three rod splice alignment technique.**

(30) Priority: **01.08.80 US 174319**

(43) Date of publication of application:
**10.02.82 Bulletin 82/06**

(45) Publication of the grant of the patent:
**02.05.85 Bulletin 85/18**

(84) Designated Contracting States:
**AT BE CH DE FR GB IT LI NL SE**

(56) References cited:
**EP-A-0 014 610**
**DE-A-2 602 661**
**DE-A-2 752 398**
**DE-A-2 841 659**
**FR-A-2 377 049**
**US-A-4 223 979**

(73) Proprietor: **AMP INCORPORATED**
**P.O. Box 3608 449 Eisenhower Boulevard**
**Harrisburg Pennsylvania 17105 (US)**

(72) Inventor: **Johnson, Tore Rudolph**
**2412 Jericho Drive**
**Harrisburg Pennsylvania 17110 (US)**

(74) Representative: **Gray, Robin Oliver et al**
**BARON & WARREN 18 South End Kensington**
**London W8 5BU (GB)**

Courier Press, Leamington Spa, England.

**Description**

This invention relates to a fibre optic connector using a three rod clamping technique for axial alignment and particularly suitable for a fibre optic splice.

It is known from US--A 3,989,567 to provide an optical fibre coupling device comprising three cylindrical bodies or rods disposed in contact to define an interstitial space through which optical fibres may be passed for alignment purposes. Middle portions of the rods are of reduced diameter to define an interstitial space of enlarged cross-section within which fibre ends may abut.

It is known from DE—A—2,841,659 to provide an optical fibre coupling device comprising a bipartite housing of generally cylindrical form defining a through passageway and containing a plurality of spring wires extending longitudinally between radially spaced end portions. On telescopic movement of the housing parts, the wires are bowed inwardly at middle portions to clamp a fibre or fibres in axial position.

It is an object of the invention to provide improved means whereby an optical fibre may be positioned and clamped in precise axial location and in particular to provide improved means for splicing optical fibres in precise alignment.

According to the present invention a fibre optic connector for aligning collinearly the axes of a pair of opposed optical fibres comprises at least three cylindrical rod members engaged in a bunch defining an interstitial space for the optical fibres, each rod having enlarged diameter end portions and a reduced diameter middle portion, the rods being contained within a passageway of a housing to maintain the enlarged diameter end portions in engagement with each other, and is characterised in that the housing is deformable about the rods which are resiliently deformable, and that ferrule means surround the housing deforming — in a first position — the housing inwardly about the middle portions of the rods and bowing the middle portions inwardly towards each other so that they define an interstitial space between the rod middle portions which converges from opposite ends towards a reduced diameter central portion, the ferrule means being movable to a second position thus further deforming the housing, increasingly bowing the rod middle portions more closely together, and further reducing the diameter of the interstitial space at the central portion.

The invention will now be described with reference, by way of example, to the accompanying partly diagrammatic drawings, in which:—

Figure 1 is an exploded perspective view of the subject connector, in conjunction with a shipping wire intended as a mandrel prior to utilisation of the connector in a field application;

Figure 2 is a perspective view of the connector and mandrel illustrated in Figure 1, in the completed assembly condition;

Figure 3 is a perspective view of a pair of optical waveguides in readiness for splicing by the subject connector;

Figure 4A is a longitudinal section view through the optical splice in a preliminary assembly condition;

Figure 4B is a transverse section view taken along the line 4B—4B of Figure 4A, illustrating the alignment rod configuration and mandrel in a preliminary assembly condition;

Figure 5A is a longitudinal section view through the subject connector, with the mandrel replaced by the pair of optical waveguides;

Figure 5B is a transverse section view taken along the line 5B—5B of Figure 5A illustrating the alignment rod configuration with respect to an optical waveguide;

Figure 6 is a longitudinal section view through the subject connector, with the crimping collars moved inward toward each other in a completed assembly condition;

Figure 6B is a transverse section view taken along the line 6B—6B of Figure 6A, illustrating the alignment rod configuration in a final assembly condition, and the optical waveguides held therebetween;

Figure 7 is a transverse section view through a second embodiment of the present invention; and

Figure 8 is a transverse section view through a third embodiment of the present invention.

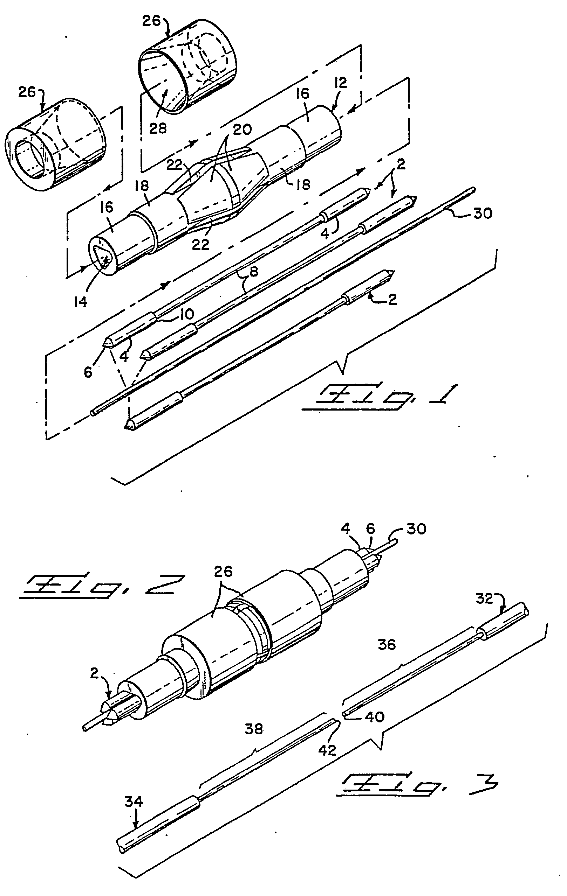

Referring to Figures 1, 2 and 4A, a preferred embodiment of the subject invention comprises three elongate cylindrical rods (2), of resilient metallic or plastics material, each of which has larger diameter end portions (4), conical tips (6), and a smaller diameter central portion (8) integrally joined to the larger diameter portions (4) at integral steps (10), an elongated tubular, elastomeric body (12) having an axial passageway (14) extending therethrough, and an external profile comprising a first step (16), a second step (18), doubly tapered protuberance in the form of cone sections (20) projecting radially outward of the periphery of the tubular body (12), axially directed slots (22) separating adjacent cone sections (20) and a pair of collars (26) having respective bores (28), each being truncated conical for a purpose to be explained in greater detail below. A cylindrical shipping wire (30) serves to limit constriction of the connector during shipment and prior to assembly of optical waveguides in the connector.

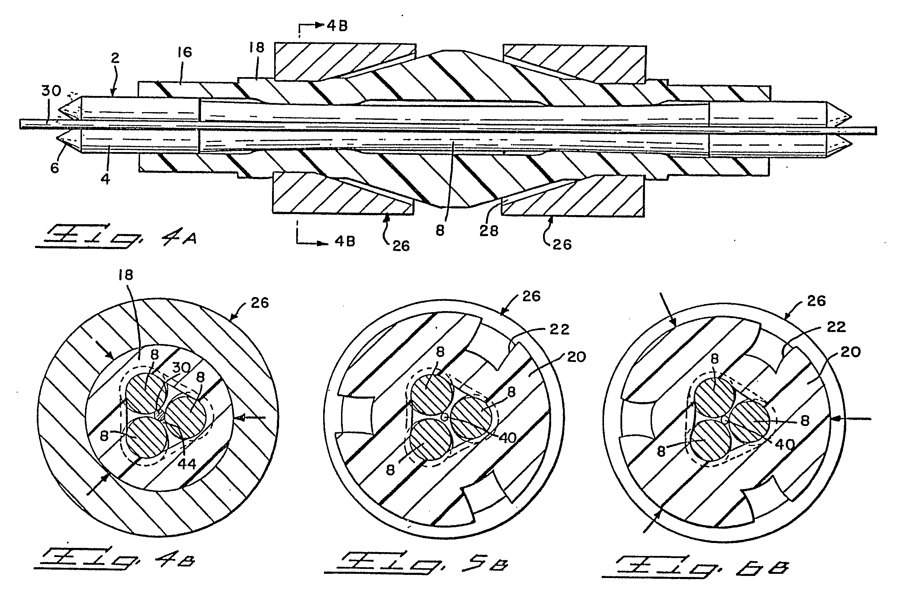

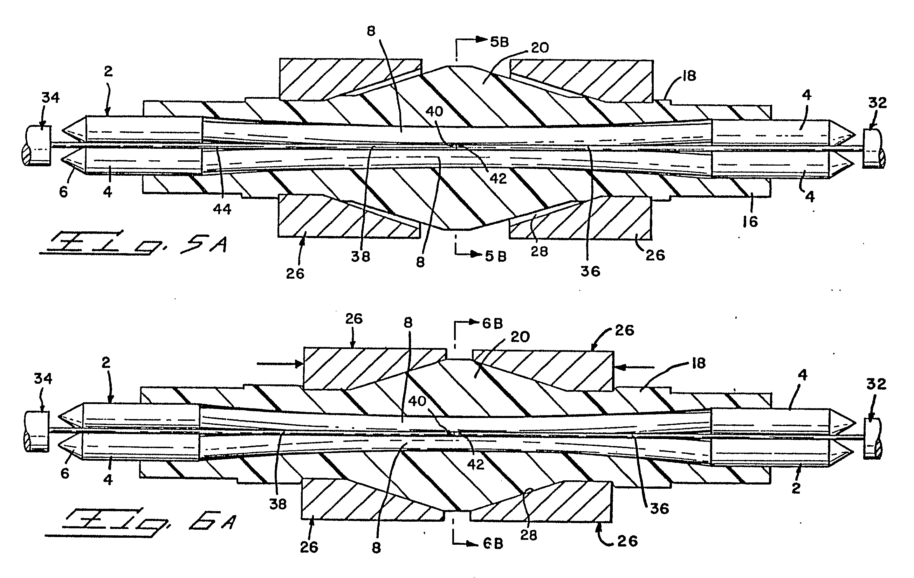

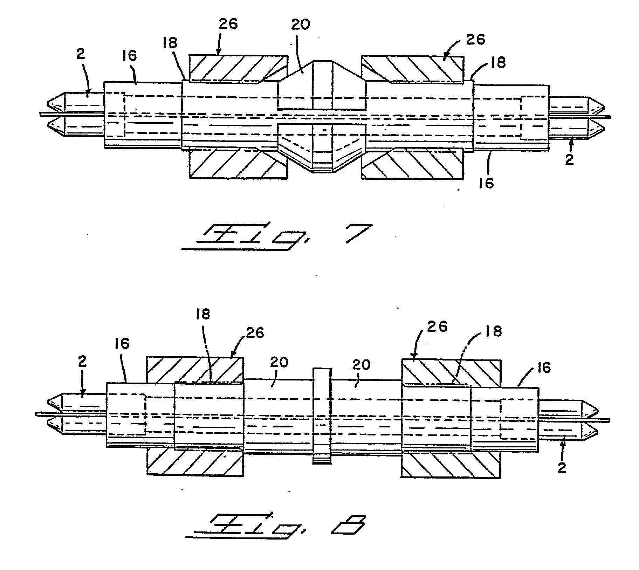

Proceeding with reference to Figures 2 and 4A, assembly of the component parts proceeds as follows. The three elongate rods (2) are inserted within the passageway (14), the body (12) expanding resiliently to allow passage of the rods along the passageway. The sectional dimension of the passageway (14) is such that the larger diameter end portions (4) of the rods (2) are held with their cylindrical peripheries in contacting parallel relationship. In Figure (4B) the interstitial passageway defined by and between the rods (2) is designated as numeral (44) for the purposes of illustration. As shown by Figures 2 and 4A, the cylindrical shipping wire (30) is inserted between the rods (2) and along the interstitial passageway (44). Thereafter, both of the crimping collars (26) are moved along the body (12) and establish interference engagement with the second, larger stepped diameter (18) of the tubular body (12), exerting radial compression forces upon the tubular body (12), and further causing inward radial constriction of the passageway (14) and inward radial deflection of the central portions of the rod segments (8). The presence of the shipping wire (30) limits deflection of the rods and constriction of the passageway (44).

Turning now to Figure 5A, the wire (30) is removed from between the rods (2), allowing the segments (8) of the rods (2) to deflect radially inward a slight amount. Thereby, the interstitial passageway (44) between the inwardly deflected portions of the rod segments (8), assumes a truncated conical profile from each end of the passageway (44) axially toward the centre of the passageway (44). This doubly tapered profile funnels the exposed core lengths (36, 38) (Fig. 3) of respective waveguides as the waveguides are inserted into and traversed along the passageway (44).

Figure 5B is a section view showing that the forward end (40, 42) of the waveguides are loosely constrained within the interstitial passageway (44).

Proceeding to Figures 6A and 6B, the crimping collars (26) are further moved along the tubular body, axially toward each other into a final crimped assembly condition, with the truncated bores (28) of the collars radially engaging and deflecting inward the cones (20) of the tubular body (12), further deflecting radially inward the tubular body (18), and the midportions of the rod portions (8). These deflections of the rod segments (8) cause their midportions to engage peripherally against the exposed waveguide cores (36, 38) extending therethrough, clamping the waveguides between all three of the deflected midportions of the rod segments (8). Such a condition is illustrated in section by Figure 6B, and it will be noted that the interstitial passageway (44) in the final crimped condition is dimensioned substantially to the diameter of the waveguides. The angles of taper in respect to the interior truncated profiles, of the crimping collars (26) and the tapered external surfaces of the retention cones (20), are selected such that the crimping collars (26) will lock against the retention cones (20), thereby preventing any relaxation of the crimping pressure upon the tubular body (12). Clamping of the rod segments (8) upon the exposed waveguides proceeds from ends of the assembly toward the middle, and is concentrated at the forward ends of the waveguides between common rod segments, assuring axial alignment of the waveguides.

Figure 7 illustrates another embodiment of the present invention, in which the external profiled features of the tubular body (12) and the crimping collars (26) are changed, as follows. The tapers of the retention cones (20), and the crimping collar bores (28), are steeper than in the alternative embodiment depicted in Figure 7, and eliminates locking between the crimping collars (26) and the cones (20). Figure 8 illustrates yet another embodiment of the present invention in which the external crimping profile of the tubular body (12), the protuberances (20), the collars (26) and the bores (28) of the collars have right cylindrical sections and profiles. In all other respects, however, the alternative embodiments of Figures 7 and 8 are like the preferred embodiment described first in order.

Viewing Figures 5A and 6A, it will be apparent that the crimping collars may progressively move along the profile of body (12) by use of relatively simple application tooling. For example, a vice-like hand tool may be used for the necessary movement of the collars (26) into the final crimped condition. Also, it will be noted that the collars may be disengaged by their movement outward axially along the body (12) to facilitate repair of the waveguides. Thus, the present splice is field applicable by comparatively simple tooling, yet is repairable.

Several further observations will be obvious from a combined consideration of Figures 4A, 5A and 6A. First, the oversized end diameters of the rods provide an oversized interstitial passageway for easy guided insertion of the waveguide therein. Secondly, the oversized end diameters of the rods engage one another radially and spaces apart the smaller diameter, intermediate rod segments, thereby enabling deflection radially the rod segments to for the resultant biconical profiled interstitial passageway. Also, it will be apparent that the clamping forces exerted by the rods are directed radially upon the ends (40, 42) of the waveguides. The alignment function achieved by the three rods is optimally located at the juncture of the waveguide ends (40, 42), to achieve optimal results in coupling efficiency.

The alternative embodiments depicted in Figures 7 and 8, illustrate but several of the many variations in crimping profiles which will become apparent to one skilled in the art upon a reading of the teachings herein set forth. The principles of the subject invention, may find application in various alternative and obvious embodiments, and the scope and the spirit of the present invention is not to be confined solely to the embodiments herein set forth.

## Claims

1. A fibre optic connector for aligning collinearly the axes of a pair of opposed optical fibres, the connector comprising at least three cylindrical rod members engaged in a bunch defining an interstitial space for the optical fibres, each rod having enlarged diameter end portions and a reduced diameter middle portion, the rods being contained within a passageway of a housing to maintain the enlarged diameter end portions in engagement with each other, characterised in that the housing (12) is deformable about the rods (2) which are resiliently deformable, and that ferrule means (26) surround the housing (12) deforming — in a first position — the housing (12) inwardly about the middle portions (8) of the rods (2) and bowing the middle portions (8) inwardly towards each other so that they define an interstitial space (44) between the rod middle portions (8) which converges from opposite ends towards a reduced diameter central portion, the ferrule means (26) being movable to a second position thus further deforming the housing (12), increasingly bowing the rod middle portions (8) more closely together, and further reducing the diameter of the interstitial space (44) at the central portion.

2. A connector as claimed in claim 1, characterised in that the ferrule means (26) comprises a pair of collars (26) axially spaced — in the first position — on opposite sides of an external annular protuberance (20) formed on the housing (12), the collars (26) being movable axially together to the second position constraining the protuberance (20) inwardly.

3. A connector as claimed in claim 1 or in claim 2, characterised in that the housing is of elastomeric material.


**Revendications**

1. Connecteur optique de fibres destiné à aligner colinéairement les axes de deux fibres optiques opposées, le connecteur comprenant au moins trois éléments de tiges cylindriques groupés en un faisceau définissant un espace interstitial pour les fibres optiques, chaque tige comportant des tronçons extrêmes de diamètre agrandi et un tronçon médian de diamètre réduit, les tiges étant logées à l'intérieur-d'un canal d'un boîtier afin de maintenir les tronçons extrêmes de diamètre agrandi en contact les uns avec les autres, caractérisé en ce que le boîtier (12) peut être déformé autour des tiges (2) qui sont déformables élastiquement, et en ce que des viroles (26) entourent le boîtier (12), déformant — dans une première position — le boîtier (12) vers l'intérieur, autour des tronçons médians (8) des tiges (2) et courbant les tronçons médians (8) vers l'intérieur et les uns vers les autres afin qu'ils définissent entre eux un espace interstitiel (44) qui converge des extrémités opposées vers une partie centrale de diamètre réduit, les viroles (26) étant mobiles vers une seconde position, déformant ainsi davantage le boîtier (12), courbant davantage les tronçons médians (8) des tiges pour les rapprocher plus étroitement et réduisant davantage le diamètre de la partie centrale de l'espace interstitiel (44).

2. Connecteur selon la revendication 1, caractérisé en ce que les viroles (26) comprennent deux bagues (26) espacées axialement — dans la première position — sur les côtés opposés d'une protubérance annulaire extérieure (20) formée sur le boîtier (12), les bagues (26) pouvant être rapprochées axialement jusqu'à la seconde position contraignant la protubérance (20) vers l'intérieur.

3. Connecteur selon la revendication 1 ou la revendication 2, caractérisé en ce que le boîtier est en élastomère.


**Patentansprüche**

1. Faseroptik-Verbinder zur kolinearen Ausrichtung der Achsen eines Paars gegenüberstehender optischer Fasern, mit wenigstens drei zu einem Bündel zusammengefaßten Stabelementen, die einen Zwischenraum für optische Fasern begrenzen, wobei jeder Stab Endabschnitte vergrößerten Durchmessers und einen Mittelabschnitt verminderten Durchmessers aufweist, die Stäbe innerhalb eines Durchgangs eines Gehäuses enthalten sind, um die Endabschnitte vergrößerten Durchmessers im Eingriff miteinander zu halten, dadurch gekennzeichnet, daß das Gehäuse (12) um die elastisch deformierbaren Stäbe (2) herum deformierbar ist, daß das Gehäuse (12) umgebende Ringbeschläge (26) in einer ersten Position das Gehäuse (12) einwärts um die Mittelabschnitte (8) der Stäbe (2) herum deformieren und die Mittelabschnitte (8) einwärts aufeinander zu biegen, so daß diese zwischen den Stabmittelabschnitten (8) einen Zwischenraum (44) begrenzen, der von entgegengesetzten Enden aus zu einem Mittelabschnitt verminderten Durchmessers konvergiert, und daß die Ringbeschläge (26) in eine zweite Position bewegbar sind, so daß sie das Gehäuse (12) weiter deformieren, zunehmend die Stabmittelabschnitte (8) näher aneinander biegen und ferner den Durchmesser des Zwischenraums (44) an dem Mittelabschnitt vermindern.

2. Verbinder nach Anspruch 1, dadurch gekennzeichnet, daß die Ringbeschläge (26) ein Paar von Hülsen (26) umfassen, die in der ersten Position auf entgegengesetzten Seiten eines äußeren ringförmigen Vorsprungs (20), der auf dem Gehäuse (12) geformt ist, im axialen Abstand angeordnet sind, und daß die Hülsen (26) axial aufeinanderzu in die zweite Position bewegbar sind und den Vorsprung (20) einwärts einschnüren.

3. Verbinder nach Anspruch 1 oder 2, dadurch gekennzeichnet, daß das Gehäuse aus elastomerem Material besteht.

Fig. 1

Fig. 2

Fig. 3

Fig. 4A

Fig. 4B

Fig. 5B

Fig. 6B

2

FIG. 5A

FIG. 6A

_Fig. 7_

_Fig. 8_